# DEMANDE DE BREVET EUROPEEN

(11) **EP 2 105 760 A1**
(43) Date de publication de la demande: **30.09.2009**
(21) Numéro de dépôt: 09154963.4
(22) Date de dépôt: 12.03.2009
(51) Int. Cl.: G01S 5/04

(54) **Procédé et système de pistage et de suivi d'emetteurs**

(30) Priorité: 28.03.2008 FR 0801715
(71) Demandeur: Thales, 92200 Neuilly-sur-Seine (FR)
(72) Inventeur: Ratton, Laurent, 78210, ST CYR L'ECOLE (FR); Grandin, Jean-François, 78630, ORGEVAL (FR)
(74) Mandataire: Lucas, Laurent Jacques

(57) **Abrégé**

La présente invention concerne un système et un procédé de pistage et de suivi d'émetteurs. Le procédé de pistage mono-capteur d'émetteurs de signaux évoluant dans un espace est mis en oeuvre par un capteur (211) placé dans le voisinage dudit espace, le procédé comportant une étape de création de pistes mono-capteur, chaque piste mono-capteur comprenant des descripteurs de signaux émis par un même émetteur, ledit capteur exécutant cycliquement, pour chaque piste mono-capteur, au moins les étapes suivantes :
■ acquérir et cumuler sur une durée Δt de nouvelles valeurs de descripteurs de signaux ;
■ à partir de ces nouvelles valeurs de descripteurs, calculer un ou plusieurs paramètres caractérisant lesdits signaux sur cette durée Δt;
■ sélectionner un ou plusieurs paramètres à regrouper pour former un bloc de données caractérisant les signaux reçus pendant la durée Δt.

## Description

La présente invention concerne un système et un procédé de pistage et de suivi d'émetteurs mettant en oeuvre des échanges de données entre plusieurs capteurs répartis. L'invention s'applique notamment à l'identification, à la localisation, et au suivi d'émetteurs radars pour la surveillance de trafic aérien, par exemple via l'utilisation de capteurs passifs de détection électromagnétique.

A titre d'exemple, dans un espace comprenant des systèmes émetteurs telles que des antennes fixées au sol, des aéronefs et des véhicules de terrain pourvus de radars, un problème souvent posé est de déterminer et de suivre dans le temps la situation globale de ces émetteurs de signaux, c'est à dire notamment leur type, leurs positions respectives et leurs déplacements.

Pour répondre à ce problème, des capteurs - par exemple des capteurs passifs de détection électromagnétique, plus souvent désignés par le sigle anglo-saxon ESM, pour « Electronic Support Measurement » - peuvent être répartis à proximité de l'espace d'intérêt, sur des plates-formes fixes ou mobiles. Chaque capteur reçoit alors des signaux émis par les émetteurs. Des paramètres radioélectriques et géométriques sont extraits desdits signaux, par exemple la direction d'arrivée du signal, puis les capteurs s'échangent des informations cinématiques et/ou radioélectriques sur les émetteurs détectés afin de dresser un état de la situation globale. Classiquement, deux catégories de solutions sont envisagées pour déterminer cette situation globale.

Une première approche connue est la fusion de pistes. On entend par piste l'ensemble des informations caractérisant un signal radioélectrique provenant d'une même source émettrice. Chaque capteur produit plusieurs pistes, chaque piste correspondant à un émetteur différent ; ces pistes sont ensuite échangées entre capteurs selon un format statique et via une cadence de transmission généralement fixe. Bien que la mise en oeuvre de cette solution s'avère relativement simple, celle-ci comporte plusieurs inconvénients. D'une part, le pistage des émetteurs étant effectué séparément pour chaque capteur, cette méthode conduit à réduire la fiabilité d'élaboration de la situation globale ; elle équivaut en effet à poser certaines hypothèses qui peuvent s'avérer inexactes après fusion des pistes. Il est notamment très difficile, voire impossible d'effectuer une décorrélation temporelle des données puisque les signaux électromagnétiques détectés ne sont pas échangés entre les capteurs, ces derniers échangeant des paramètres caractérisant partiellement les signaux détectés. D'autre part, la cadence de transmission des pistes et la taille du contenu pour chacune d'elles étant en général fixe, la quantité de données transmises n'est pas adaptée à la richesse d'information à transmettre, ce qui rend la communication inefficace du fait notamment de la présence de multiples redondances dans les transmissions et de goulets d'étranglements lorsqu'un grand volume d'informations doit être transmis. Parmi les documents traitant de cette première approche connue par fusion de pistes, on peut citer la publication de Olivier E. Drummond, « Track Fusion With Feedback », Proceedings of the SPIE - the international society for optical engineering, vol. 2759, 10 avril 1996, pages 342-360. Cette publication évoque la transmission de pistes mono-capteurs obligeant toutefois à exécuter un traitement de décorrélation, lourd et propageant des erreurs numériques.

Une deuxième approche connue est celle de la fusion centralisée. Selon cette méthode, tous les signaux détectés par les capteurs sont transmis à un système de fusion de données, lequel associe les signaux issus des mêmes émetteurs puis fusionne les signaux associés. Afin de déterminer la situation globale de manière fiable, toutes les données brutes doivent être transmises, c'est à dire tous les signaux électromagnétiques captés. Or, généralement, la quantité de données pouvant être échangées entre les capteurs est fortement limitée, car les liaisons utilisées ont de faibles capacités, notamment en termes de débit et de cadence de transmission. Aussi, en pratique, seules des portions de données brutes sont transmises, sans assurer de continuité temporelle dans ces transmissions. La fonction de pistage est centralisée, ce qui oblige à employer une algorithmie complexe gérant une combinatoire extrêmement lourde pour effectuer les associations entre les signaux captés. Cette deuxième méthode est donc très coûteuse, et souvent impossible à mettre en oeuvre.

Un but de l'invention est de proposer un procédé de pistage permettant de déterminer et de suivre de manière fiable la situation d'un ou de plusieurs émetteurs de signaux évoluant dans un espace, en utilisant des capteurs répartis, sans mettre en oeuvre une solution trop coûteuse telle que susmentionnée et en limitant les transferts de données entre les capteurs. A cet effet, l'invention a pour objet un procédé de pistage mono-capteur d'émetteurs de signaux évoluant dans un espace, le procédé étant mis en oeuvre par un capteur placé dans le voisinage dudit espace, le procédé comportant une étape de création de pistes mono-capteur, chaque piste mono-capteur comprenant des descripteurs de signaux émis par un même émetteur, **caractérisé en ce que** pour chaque piste mono-capteur, ledit capteur exécute cycliquement au moins les étapes suivantes :
■ acquérir et cumuler sur une durée Δt de nouvelles valeurs de descripteurs de signaux ;
■ à partir de ces nouvelles valeurs de descripteurs, calculer un ou plusieurs paramètres caractérisant lesdits signaux sur cette durée Δt ;
■ sélectionner un ou plusieurs paramètres à regrouper pour former un bloc de données caractérisant les signaux reçus pendant la durée Δt.

Le procédé de pistage mono-capteur selon l'invention produit des blocs de données - des résumés statistiques - qui ne sont relatifs qu'aux données recueillies pendant une durée Δt. Ces résumés successifs sont donc décorrélés.

Selon une mise en oeuvre du procédé de pistage mono-capteur selon l'invention, après l'étape de création des paramètres à partir des nouvelles valeurs de descripteurs, les étapes suivantes sont exécutées :
■ mesurer le contenu informationnel d'un ou de plusieurs paramètres,
■ classer lesdits paramètres en fonction de leur contenu informationnel et du volume de données sur lequel ils sont exprimés, un rang élevé dans le classement étant affecté à un paramètre pourvu d'un contenu informationnel important et/ou exprimé avec un faible volume de données,
■ affecter des priorités aux dits paramètres en fonction du classement précédent et de critères opérationnels définis, par exemple, par un organe de commande et de contrôle. Ces deux étapes supplémentaires permettent d'identifier les paramètres les plus denses en information, et donc ceux dont la diffusion vers des modules de traitement externes est la plus judicieuse, car la plus utile.

Par ailleurs, la durée de cumul Δt peut être ajustée, notamment en fonction du débit de nouvelles valeurs de descripteurs reçues par le capteur, la durée Δt étant réduite lorsque ledit débit augmente. Contrairement à un pistage classique au cours duquel, des paramètres fixes seraient émis périodiquement pour traduire l'évolution d'un signal, la durée de cumul Δt est adaptée en fonction du débit de valeurs entrant, notamment de manière à ne pas transmettre inutilement des données et suivre plus précisément un émetteur lorsque la nature des signaux qu'il émet change beaucoup.

En outre, l'étape d'acquisition et de cumul des nouvelles valeurs de descripteurs peut être complétée par une étape de calcul d'une description statistique d'au moins un desdits descripteurs, ladite description statistique étant associée au descripteur afin de concentrer le contenu informationnel du ou des paramètres créés à partir dudit descripteur.

L'invention a également pour objet un procédé de création de pistes multi-capteurs sur des émetteurs de signaux évoluant dans un espace, le procédé étant mis en oeuvre par des capteurs répartis dans le voisinage dudit espace, les capteurs détectant des signaux émis par le ou les émetteurs, le procédé comprenant au moins les étapes suivantes :
■ chacun desdits capteurs exécute localement un procédé de pistage mono-capteur tel que décrit plus haut pour produire au cours du temps des blocs de données successifs, chacun desdits blocs caractérisant des signaux détectés sur un tronçon temporel disjoint des tronçons temporels couverts par les autres blocs, une série de blocs produits à partir de signaux émis par un même émetteur formant une piste mono-capteur ;
■ les capteurs diffusent successivement lesdits blocs vers au moins un module d'association, ledit module associant entre-eux des blocs caractérisant des signaux issus d'un même émetteur pour créer une ou plusieurs pistes multi-capteurs.
Le procédé de pistage multi-capteurs selon l'invention fiabilise le processus d'association par rapport à un procédé classique, car les caractéristiques des nouveaux signaux reçus ne sont pas noyées dans celles des signaux déjà traités ; il y a isolement des nouvelles informations reçues. En outre, les caractéristiques discriminantes des nouveaux signaux sont envoyées par chaque capteur pour faciliter ce processus d'association. Ce procédé permet, de plus, d'optimiser le volume de données à transmettre.

L'invention a également pour objet un procédé de suivi d'émetteurs évoluant dans un espace, le procédé étant mis en oeuvre par des capteurs répartis dans le voisinage dudit espace et détectant des signaux émis par le ou les émetteurs, le procédé comportant au moins les étapes suivantes :
■ créer une ou plusieurs pistes multi-capteurs via l'exécution d'un procédé de pistage multi-capteurs tel que sus décrit ;
■ transmettre les pistes multi-capteurs créées précédemment à un module de synthèse pour estimer la cinématique des émetteurs.

Le procédé de suivi d'émetteurs selon l'invention peut, en outre, comporter l'étape suivante :
■ le module de synthèse diffuse en retour, vers les capteurs, la situation cinématique et technique des émetteurs,
l'étape de sélection des paramètres exécutée lors du pistage mono-capteur exploitant la connaissance de ladite situation pour guider la sélection des paramètres à intégrer dans les blocs de données. Par « situation technique », on entend les paramètres liés aux mesures physiques effectuées par les capteurs. Par exemple, dans le cas de capteurs passifs de détection électromagnétique, ces paramètres caractérisent les formes d'onde des signaux émis par les émetteurs.

Selon un mode de mise en oeuvre du procédé de suivi d'émetteurs selon l'invention, les blocs de données produits par les capteurs sont diffusés via des liaisons contraintes, et pour une piste donnée, la durée de cumul Δt des nouvelles valeurs de descripteurs et/ou la taille maximale autorisée d'un bloc de données est ajustée en fonction du niveau de contraintes de capacité desdites liaisons. L'adaptation dynamique de la durée Δt et de la taille maximale d'un bloc de données permet notamment d'optimiser la qualité du suivi en fonction des contraintes liées à la situation (par exemple, le nombre de plates-formes portant un capteur et le nombre d'émetteurs) ou à la géométrie, comme les problèmes de masquage.

Selon un mode de mise en oeuvre du procédé de suivi d'émetteurs selon l'invention, des niveaux de priorité sont attribués à chaque piste mono-capteur, et pour une piste donnée, la durée de cumul Δt des nouvelles valeurs de descripteurs et/ou la taille maximale autorisée d'un bloc de données est ajustée en fonction de la priorité attribuée à ladite piste. L'attribution de niveaux de priorité aux pistes permet, par exemple, de privilégier le suivi d'émetteurs considérés comme importants. Les niveaux de priorités peuvent notamment être choisis en fonction de la proximité des capteurs vis-à-vis de certains émetteurs, de l'intérêt opérationnel d'un émetteur en particulier, d'un changement soudain de la situation d'un émetteur en particulier.

Le procédé de suivi d'émetteurs selon l'invention peut comporter, en plus, une étape de traitement des biais de mesures, la localisation de chacun des émetteurs estimé par le module de synthèse étant transmise à chaque capteur. Le traitement des biais est en effet amélioré par une analyse multi-capteurs.

L'invention a également pour objet un système de suivi d'émetteurs évoluant dans un espace, le système comprenant plusieurs capteurs répartis au voisinage dudit espace, au moins un module d'association de pistes, les capteurs étant reliés par des liaisons contraintes à au moins un module de fusion de pistes, au moins un capteur du système exécutant les étapes du procédé de pistage mono-capteur tel que décrit plus haut.

Selon un mode de réalisation du système selon l'invention, les émetteurs produisent des ondes électromagnétiques, et les capteurs sont des capteurs passifs de détection électromagnétique. Le caractère passif des capteurs permet notamment de garantir une discrétion électromagnétique du système. La collaboration de plusieurs de ces capteurs passifs pour former un système multi-capteurs permet de reconstituer une localisation complète, voire l'estimation de la vitesse des émetteurs, ce qui est beaucoup plus difficilement accessible en mode mono-capteur. Selon un autre mode de réalisation du système selon l'invention, des capteurs optroniques infrarouges ou en lumière visible sont utilisés.

Le système selon l'invention peut comprendre plusieurs stations, chaque station comprenant un capteur, un module d'association et un module de fusion de pistes, les stations étant connectées entre-elles via des liaisons contraintes. La duplication des modules d'association et de fusion de pistes permet notamment d'obtenir une meilleure tenue du système aux pannes et destructions de stations.

Le système selon l'invention peut être utilisé pour la surveillance du trafic aérien ou la surveillance d'objets d'intérêt au sol, les capteurs étant placés sur des porteurs aériens et/ou des plates-formes maritimes et terrestres, au moins un module de synthèse étant connecté aux capteurs via des liaisons radioélectriques.

D'autres caractéristiques apparaîtront à la lecture de la description détaillée donnée à titre d'exemple et non limitative qui suit faite en regard de dessins annexés qui représentent :
- la figure 1, un synoptique illustrant les étapes d'un exemple de procédé de suivi d'émetteurs selon l'invention ;
- la figure 2, un synoptique illustrant le fonctionnement d'un exemple de système de suivi d'émetteurs selon l'invention,
- la figure 3, un synoptique illustrant les étapes d'un procédé de pistage mono-capteur selon l'invention ;
- la figure 4, un synoptique illustrant les étapes d'un procédé de pistage multi-capteurs effectué à partir d'informations issues du procédé de pistage mono-capteur.

Les mêmes références dans des figures différentes désignent les mêmes éléments.

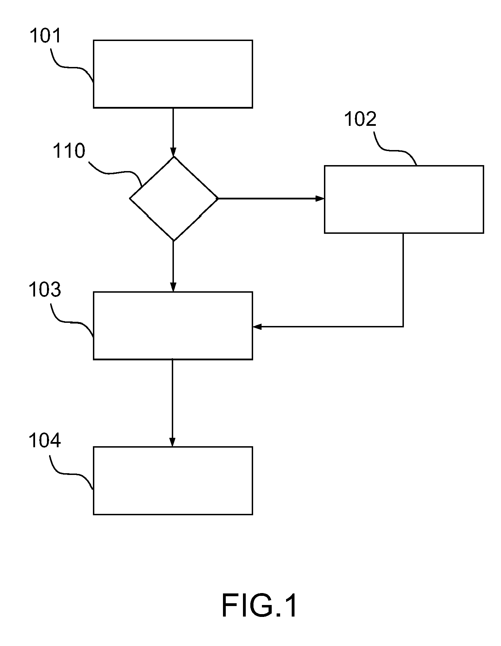

La figure 1 illustre, par un synoptique, les étapes d'un exemple de procédé de suivi d'émetteurs selon l'invention. Le procédé de la figure 1 est mis en oeuvre par des capteurs répartis dans le voisinage des émetteurs. Deux phases distinctives sont identifiables dans l'exécution du procédé : une première phase de création de pistes multi-capteurs, et une seconde phase d'entretien desdites pistes.

La première phase du procédé selon l'invention se traduit notamment par l'exécution de quatre étapes principales 101, 102, 103, 104 : une première étape 101 de construction de pistes mono-capteur et de diffusion de ces pistes, une deuxième étape 102 d'association des pistes et de création de pistes multi-capteurs, une troisième étape 103 de fusion des données multicapteurs, et une quatrième étape 104 de diffusion de la situation globale vers les capteurs. La deuxième phase du procédé comporte les étapes de la première phase, à l'exception de la deuxième étape 102 d'association qui n'est pas exécutée.

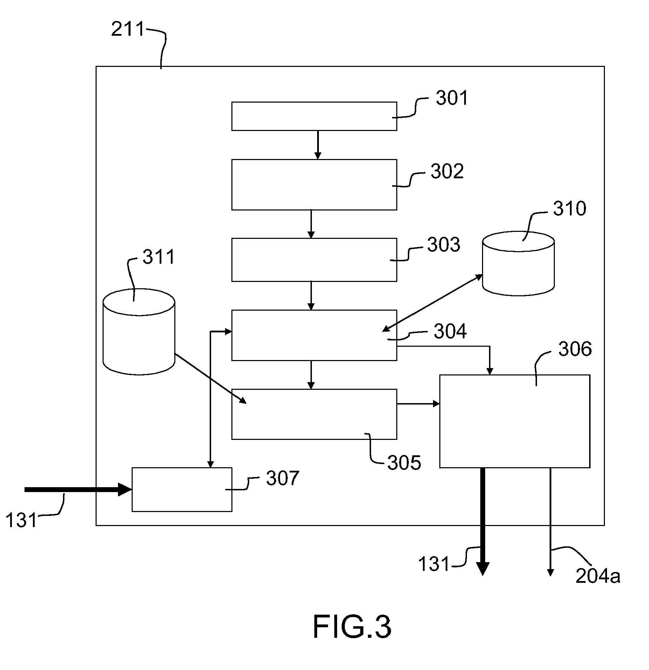

Lors de la première étape 101, chacun des capteurs répartis détecte des signaux issus des émetteurs. A partir des signaux détectés, chaque capteur crée alors, en utilisant des techniques connues de l'homme du métier, des pistes mono-capteur. En d'autres termes, chaque capteur suit des émetteurs indépendamment des autres capteurs. Les pistes mono-capteur sont diffusées selon des techniques propres à l'invention : chaque capteur fournit en sortie des blocs de données successifs, un bloc de données caractérisant des signaux issus d'un même émetteur sur un tronçon temporel propre. Les tronçons temporels correspondant à chaque bloc de données sont disjoints dans le temps, de telle sorte que chaque bloc de données est décorrélé des autres blocs. La première étape 101 du procédé est détaillée plus loin en figure 3.

A l'issue de la première étape 101, chaque bloc de données subit un test 110 pour déterminer s'il appartient à une piste mono-capteur ayant déjà été assignée à une piste multi-capteurs. Si le bloc de données appartient à une piste mono-capteur n'ayant été assignée à aucune piste multi-capteurs, alors la deuxième étape d'association 102 est exécutée ; il s'agit de la première phase de création de pistes multi-capteurs. Si au contraire, le bloc de données appartient à une piste mono-capteur déjà assignée à une piste multi-capteurs, alors la deuxième étape d'association 102, n'est pas exécutée et la piste multi-capteurs est enrichie avec les informations contenues dans le bloc de données ; il s'agit de la seconde phase du procédé, autrement dit, de l'entretien des pistes multi-capteurs.

Lors de la deuxième étape 102, les blocs de données produits par la première étape 101 sont réceptionnés par un module d'association, lequel associe, selon des critères statistiques, les blocs correspondant aux signaux d'un même émetteur. En d'autres termes, si le module d'association établit une association entre un premier bloc issu d'un premier capteur et un second bloc issu d'un second capteur, cela signifie que les deux blocs caractérisent des signaux issus d'un même émetteur. Le module d'association établit ainsi une table d'association entre des blocs, et donc entre les pistes mono-capteur afin de créer une piste multi-capteurs pour chaque émetteur. Deux cas se présentent : l'association des signaux recueillis dans le temps par un seul capteur, et l'association des signaux recueillis par des capteurs distincts. Dans le cas de capteurs passifs géographiquement distincts, l'étape d'association est accompagnée par un procédé souvent désigné par le terme anglo-saxon « deghosting », c'est-à-dire l'élimination d'émetteurs fantômes. En effet, la mesure passive de chaque capteur fournit la direction d'arrivée du signal émis, mais pas la distance à laquelle il a été émis. Aussi, les intersections des directions recueillies par plusieurs capteurs correspondent soit à des émetteurs réels, soit à des intersections sans émetteur. L'élimination des intersections dont on suppose qu'elles ne correspondent pas à un émetteur est le procédé d'élimination des émetteurs fantômes.

Lors de la troisième étape 103, un module de pistage estime la cinématique des émetteurs en fusionnant les pistes mono-capteurs associées précédemment. Cette étape d'estimation recherche la meilleure localisation de l'émetteur, meilleure suivant un critère, en général statistique, l'algorithme d'estimation mis en oeuvre étant choisi notamment en fonction de ce critère. Plusieurs critères et algorithmes d'estimation sont envisageables.

Lors de la quatrième étape 104, le module de pistage transmet aux capteurs en retour les pistes multi-capteurs, notamment aux fins de guider le pistage mono-capteur effectué au niveau de chaque capteur.

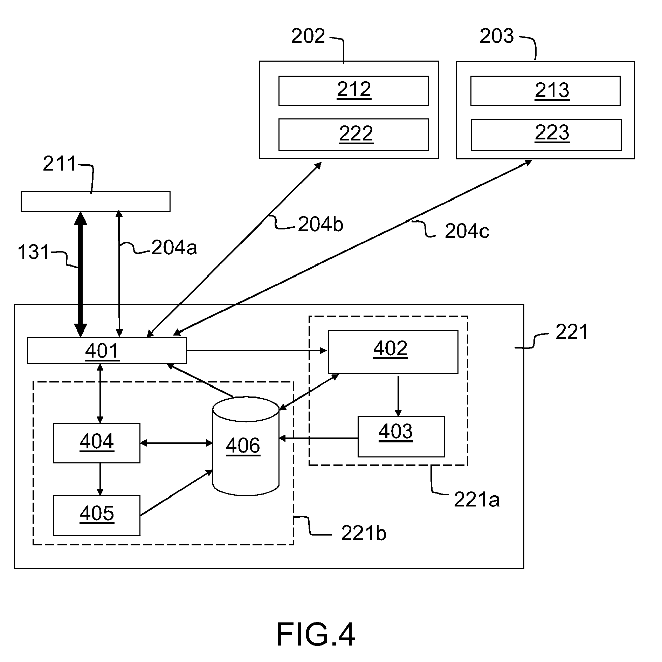

L'originalité du procédé de suivi d'émetteurs selon l'invention repose notamment sur la manière dont sont sélectionnées, diffusées puis traitées les informations issues des pistages mono-capteur répartis. Les deuxième, troisième et quatrième étapes 102, 103, 104 sont détaillées plus loin dans la figure 4.

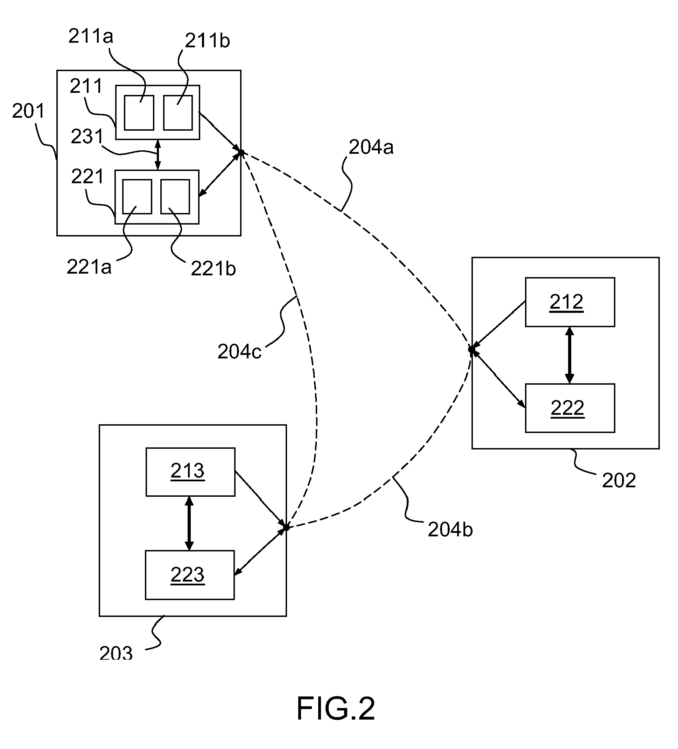

La figure 2 illustre, à travers un synoptique, le fonctionnement d'un exemple de système selon l'invention. Le système comporte des stations 201, 202, 203 réparties dans l'espace et connectées entre-elles par des liaisons 204a, 204b, 204c contraintes, par exemple en termes de débit de données et/ou de temps de latence. Dans l'exemple, une première station 201 est connectée à une deuxième station 202 via une première liaison contrainte 204a, la deuxième station 202 étant connectée à une troisième station 203 via une deuxième liaison contrainte 204b, et la troisième station 203 étant connectée à la première station 201 via une troisième liaison contrainte 204c. Le système selon l'invention peut fonctionner sur la base d'une autre topologie réseau que celle illustrée en figure 2. Par exemple, selon un autre mode de réalisation, les stations communiquent sur un anneau, chaque station étant un abonné du réseau, de sorte que les diffusions de données sont limitées aux destinataires concernés.

Une station 201, 202, 203 peut être placée sur un porteur mobile et/ou une structure fixe, par exemple sur une plate-forme maritime, un véhicule terrestre ou encore un aéronef. Pour des raisons de simplification et de concision de la description, seule la première station 201 est détaillée, les autres stations 202, 203 de l'exemple étant analogues à la première.

La première station 201 comprend un capteur 211 et un module de synthèse 221. Le capteur 211 comprend un organe de détection 211a des signaux associé à une chaîne de traitement 211b desdits signaux. Le capteur 211 est relié au module de synthèse 221 via un bus de communication interne 231. Dans l'exemple, le capteur 211 est un capteur passif de détection électromagnétique. Le capteur 211 reçoit et traite des signaux électromagnétiques émis par des émetteurs environnants, non représentés sur la figure, ces émetteurs étant par exemple des radars actifs.

Le module de synthèse comprend un module d'association 221 a et un module de fusion de données multicapteurs 221 b. Le module de synthèse 221 permet notamment de déterminer la cinématique des émetteurs environnants en rassemblant et en analysant des données issues à la fois du capteur local 211 mais également des deuxième et troisième capteurs 212, 213, ces derniers étant respectivement hébergés par la deuxième station 202 et la troisième station 203. Le module de synthèse 221 permet donc de déterminer la situation globale des émetteurs à un moment donné. Afin de suivre l'évolution dans le temps de cette situation globale, le module de synthèse 221 est alimenté cycliquement par les capteurs 211, 212,213.

Le capteur 211 détecte des signaux reçus en entrée et produit en sortie des tronçons de pistes disjoints dans le temps. Un tronçon de piste mono-capteur est qualifié par la suite de « pseudo-piste ». Chaque pseudo-piste est un bloc de données contenant un résumé statistique des signaux reçus pendant une durée Δt, cette durée pouvant varier selon les tronçons. En produisant une succession de résumés statistiques indépendants par le découpage en tronçons des signaux détectés, le capteur assure la décorrélation temporelle des pseudo-pistes et permet de blanchir les erreurs sur les données transmises au module de synthèse 221.

Un objectif du système selon l'invention étant de limiter les échanges de données entre les stations, des traitements sont effectués localement au niveau de chaque capteur 211, 212, 213, puis seules des informations sélectionnées, dites « utiles », sont échangées entre les stations 201, 202, 203. Dans un premier temps, chaque capteur 211, 212, 213 produit des pseudo-pistes, puis dans un second temps, le module de synthèse 221, 222, 223 de chaque station 201, 202, 203, associe et fusionne ces pseudo-pistes, élaborant ainsi la situation globale en utilisant des informations multi-capteurs. L'élaboration de la situation globale par le module de synthèse 221, 222, 223 comprend l'exécution d'une étape d'association 102 (voir le procédé en figure 1) puis d'une étape d'estimation 103.

Dans l'exemple, chaque module de synthèse 221, 222, 223 dupliqué dans chacune des stations 201, 202, 203 exécute les mêmes traitements sur les mêmes données. Les modules de synthèse 221, 222, 223 sont cohérents ; chacun établit la même situation globale. Cette situation globale est ensuite transmise à chaque capteur 211, 212, 213 sans devoir utiliser une liaison contrainte 204a, 204b, 204c puisque chaque capteur 211, 212, 213 est relié localement à un module de synthèse 221, 222, 223. Un avantage du mode de réalisation présenté en figure 2 est que, comme un module de synthèse est associé localement à chaque capteur, une panne de calculateur au sein d'un desdits modules et/ou la destruction d'un porteur sur lequel est fixé l'un des modules n'empêche pas le système de fonctionner dans son ensemble. Selon un autre mode de réalisation, certains capteurs ne sont accompagnés localement d'aucun module de synthèse, voire le système ne comprend qu'un seul module de synthèse. Dans ce dernier cas, ces capteurs reçoivent la situation globale via des liaisons contraintes 204a, 204b, 204c, ladite situation globale étant déterminée alors par le seul module de synthèse présent dans le système.

Par ailleurs, afin d'effectuer les étapes d'association et d'estimation tout en respectant les contraintes liées aux faibles capacités des liaisons 204a, 204b, 204c entre les stations distantes 201, 202, 203, les données à échanger sont comprimées avant d'être transmises sur lesdites liaisons 204a, 204b, 204c.

D'une part, des transferts de données sont réalisés au sein de la première station 201 entre le capteur local 211 et le module de synthèse local 221. D'autre part, des transferts de données sont effectués entre les stations distantes 201, 202, 203.

Dans un premier temps, le capteur 211 transmet une ou plusieurs pseudo-pistes au module de synthèse local 221 via le bus de communication interne 231 et aux modules de synthèse distants 222, 223 via les première et troisième liaisons contraintes 204a, 204c. Les capteurs distants 212, 213 diffusent également, via ces liaisons contraintes 204a, 204c, des pseudo-pistes qui sont reçues par le module de synthèse local 221. Dans un deuxième temps, les modules de synthèse 221, 222, 223 déterminent la situation globale et le module de synthèse local 221 transmet cette situation globale en retour au capteur local 211 via le bus de communication interne 231. La mise à jour de la situation globale par les modules de synthèse 221, 222, 223 peut être effectuée dès la réception d'une nouvelle pseudo-piste.

Comme la diffusion des pseudo-pistes est fortement contrainte par les capacités limitées des liaisons 204a, 204c, un procédé est mis en oeuvre pour :
- privilégier la transmission des données dont le contenu informationnel est le plus élevé, ce qui se traduit par l'établissement d'un compromis entre le nombre d'envois sur lesquels les informations sont transmises, et la quantité d'informations contenue par chacun de ces envois, et ce qui implique également d'adapter la cadence des échanges de données en fonction de la quantité d'informations nouvelles qui sont perçues par les capteurs ;
- comprimer l'information, ce qui se traduit par l'extraction de l'information utile contenue dans les données élémentaires ; par « information utile », on entend une information statistiquement suffisante.
Ce procédé, spécifique à l'invention, est détaillé ci-après en figure 3.

La figure 3 présente un synoptique illustrant un procédé selon l'invention de création et de diffusion des pistes mono-capteur, le procédé pouvant être mis en oeuvre par une chaîne de traitement 211a d'un capteur 211. Le procédé de la figure 3 exécute cycliquement au moins les étapes décrites ci-après.

Dans un premier temps 301, le capteur 211 détecte des signaux électromagnétiques pour les traduire en données élémentaires, c'est-à-dire en données numériques.

Dans un deuxième temps 302, à partir des données élémentaires acquises précédemment, le capteur 211, extrait les paramètres caractéristiques des signaux détectés, ces paramètres étant par exemple, la fréquence d'un signal, sa direction d'arrivée, la longueur de ses impulsions, la période de répétition des impulsions, voire les paramètres intra-pulse. Puis un procédé d'association local est exécuté : les impulsions issues d'une même tranche temporelle de détection et qui ont des paramètres similaires sont regroupées ; elles sont considérées comme étant issues du même émetteur.

Dans un troisième temps 303, le capteur 211 analyse les paramètres extraits précédemment. Les impulsions appartenant à un même groupe - c'est-à-dire celles qui sont considérées comme étant issues d'un même émetteur - sont analysées, de sorte qu'elles soient résumées par un ensemble de descripteurs. A titre d'exemple, un descripteur peut être un vecteur angulaire représentant la direction d'arrivée du signal détecté, et la vitesse de défilement angulaire.

Dans un quatrième temps 304, les paramètres des émetteurs sont suivis dans le temps par le capteur 211. En d'autres termes, un pistage mono-capteur des émetteurs est effectué. Les pseudo-pistes sont stockées dans une mémoire 310 et mises à jour lors de cette étape de pistage 304, via une première connexion 321.

Dans un cinquième temps 305, les émetteurs sont identifiés grâce à la consultation d'une base de données 311 comprenant des paramètres de référence d'émetteurs connus. Selon un autre mode de réalisation, cette dernière étape 305 d'identification des émetteurs n'est pas exécutée.

En complément des étapes 301, 302, 303, 304, 305 précitées, lesquelles sont exécutées dans des capteurs conventionnels, les modules de traitement suivants sont ajoutés :
■ un module 306 de Compression et de Diffusion des Données Elémentaires, désigné plus simplement par l'acronyme « CDDE » par la suite ;
■ un module 307 de traitement des biais.

Le module CDDE 306 produit des pseudo-pistes, c'est à dire des résumés des signaux détectés à destination des modules de synthèse 221, 222, 223, qu'ils soient distants de la station 201 hôte du capteur 211 ou qu'il soit co-localisé avec le capteur 211. Pour produire ces pseudo-pistes, le module CDDE 306 exécute les étapes décrites ci-après. Pour une piste créée lors de l'étape 304 de pistage mono-capteur :
■ Récupérer les nouvelles valeurs de descripteurs qui ont été associées à cette piste lors de l'étape d'analyse 303.
■ Cumuler ces valeurs de descripteurs sur une durée Δt (cette durée pouvant varier d'une exécution du module CDDE 306 à une autre), correspondant à un intervalle temporel compris entre deux instants de diffusion des données par le capteur 211 à destination des modules de synthèse 221, 222, 223 (figure 1). Ce cumul permet notamment de réduire l'erreur due aux imprécisions de mesures, par effet d'intégration, et de caractériser ainsi plus précisément l'émetteur correspondant à la piste concernée.
■ Calculer des paramètres à partir du cumul des valeurs. Il est important d'obtenir, au niveau des modules de synthèse 221, 222, 223, une bonne corrélation multi-capteurs des signaux détectés (voir l'étape d'association 102 de la figure 1) pour déterminer avec fiabilité la situation globale. Aussi, le module CDDE 306 calcule des paramètres à partir du cumul des valeurs, et associe à ces paramètres des coefficients de fiabilité et/ou une description statistique. Par exemple, grâce au cumul des valeurs, le module CDDE 306 produit pour la pseudo-piste, un histogramme des fréquences d'émission ou peut également fournir une fréquence d'émission accompagnée d'une valeur de dispersion autour de cette fréquence.
■ Déterminer les paramètres pertinents à diffuser aux modules de synthèse 221, 222, 223. Par exemple, si un paramètre de la piste mono-capteur ne varie jamais au cours du temps, il est inutile de transmettre de manière récurrente ce paramètre aux modules de synthèse 221, 222, 223. Ce paramètre peut être transmis une seule fois lors d'une première transmission, puis ignoré par la suite, puisqu'il n'apporterait pas d'information supplémentaire. Pour citer un autre exemple, la mesure de direction d'arrivée d'un signal par un capteur 211 est très utile pour le pistage local 304, mais est largement secondaire pour l'association en mode multi-capteurs. En outre, l'étape d'identification de l'émetteur 305 peut faciliter le choix des paramètres pertinents, les paramètres de certains émetteurs étant, par exemple, connus comme demeurant stables dans le temps.
■ Hiérarchiser les paramètres. Comme le capteur 211 dispose des informations brutes issues directement de l'étape de détection 301 pour caractériser l'ensemble des émetteurs qu'il détecte, il est en mesure d'identifier les paramètres pertinents et de les classer par ordre d'importance. La hiérarchisation des paramètres oriente l'étape d'association multi-capteurs exécutée par les modules de synthèse 221, 222, 223. Les paramètres de plus haut niveau - par exemple l'identité ou le type de l'émetteur - permettent d'écarter certaines hypothèses d'association, et les paramètres de bas niveau - par exemple les fréquences d'émission - sont exploités pour traiter des situations plus ambiguës. A titre d'illustration, si deux émetteurs de même type mais utilisant des fréquences d'émission différentes sont détectés, il est judicieux de transmettre aux modules de synthèse 221, 222, 223 ces fréquences d'émission pour pouvoir, au niveau de l'étape d'association globale 102 (figure 1), discriminer les signaux des deux émetteurs. Le niveau de finesse des paramètres à transmettre aux modules de synthèse 221, 222, 223 peut notamment être connu grâce à une communication en retour vers le capteur 211 de la situation globale déterminée par le module de synthèse local 221.
■ Mesurer la quantité d'information utile supplémentaire recueillie sur chaque pseudo-piste, cette quantité d'information étant appelée « innovation » par la suite ; puis en fonction des limites de capacité des liaisons 204a, 204b, 204c établies entre les stations 201, 202, 203. La mesure d'innovation est statistique pour certains paramètres, et qualitative sur d'autres (prenant en compte notamment l'intérêt opérationnel des émetteurs détectés). Par exemple, si un émetteur inhabituel est détecté, les informations relatives à cet émetteur peuvent être diffusées en priorité car la connaissance de la situation de cet émetteur est considérée comme essentielle. Un organe de commande et de contrôle peut par exemple être utilisé pour ajuster la priorité de suivi de certains types d'émetteurs en fonction de critères opérationnels.
■ Diffuser en priorité les informations relatives aux pistes sur lesquelles l'innovation est la plus grande.

La durée de cumul Δt peut être adaptée dynamiquement, notamment en fonction du débit de nouvelles valeurs de descripteurs reçues, de l'évolution des capacités des liaisons contraintes, de la fréquence de mise à jour souhaitée pour une piste.

A titre d'exemple, si la configuration d'un émetteur ne change pas au cours du temps (si par exemple, l'émetteur reste fixe et continue à émettre les mêmes signaux), alors un capteur détectant ces signaux, ne transmettra aucune pseudo-piste aux autres capteurs, une fois que la ou les premières pseudo-pistes auront été envoyées, puisque le gain d'information apporté par les pseudo-pistes suivantes serait nul.

Selon une variante du procédé de pistage mono-capteur selon l'invention, lorsque des signaux détectés ne peuvent, localement, être associés à aucune pseudo-piste déjà créée par le module de pistage 304, le module CDDE 306 exploite l'identité de l'émetteur, cette identité étant fournie au module CDDE 306 par le module d'identification 305. Plusieurs cas de figure différents peuvent alors se présenter.

Si l'émetteur est identifié comme étant un émetteur dont les paramètres d'émission ne changent pas ou peu au cours du temps, une nouvelle pseudo-piste est créée et sera gérée en mode mono-capteur de la même manière que les autres pseudo-pistes déjà créées lors de l'étape de pistage 304. Les signaux détectés sont alors traités par le module CDDE 306 selon le même procédé que ceux qui ont été associés à une pseudo-piste existante.

A contrario, si l'émetteur est identifié comme étant un émetteur dont les paramètres d'émission changent fréquemment au cours du temps, alors un pistage multi-capteurs des signaux détectés est privilégié, ce qui signifie qu'un plus grand volume de données doit être transmis via les liaisons contraintes 204a, 204b, 204c. En effet, le module CDDE 306 décrit alors la séquence d'impulsions reçues avec des paramètres fins, de manière à faciliter la corrélation temporelle lors de l'étape d'association 102 multi-capteurs.

Le module de traitement des biais 307 permet de diminuer les erreurs dues à la présence de biais systématiques lors des détections de signaux par chacun des capteurs. Les pseudo-pistes produites lors de l'étape de pistage 304 sont transmises au module de traitement des biais 307.

Par exemple, les mesures de direction d'arrivée d'un signal par procédé interférométrique sont entachées d'une erreur due aux imprécisions du calage de l'organe de détection 211 a du capteur 211.

L'estimation de la localisation d'un émetteur en mode multi-capteurs permet de réduire l'influence de ces biais sur la localisation finale de l'émetteur, car les biais issus des détections de chacun des capteurs 211, 212, 213 se compensent mutuellement par effet d'intégration. Aussi, la situation globale des émetteurs, calculée au sein du module de synthèse 221 (figure 2) à partir des détections de plusieurs capteurs 211, 212, 213, est retransmise - via le bus de communication interne 231 - au capteur 211 hébergé par la même station 201, permettant ainsi de réduire le biais sur l'estimation effectuée localement par le seul capteur 211.

La figure 4 présente, à travers un synoptique, les étapes d'un procédé de pistage multi-capteurs effectué à partir d'informations issues du procédé de pistage mono-capteur, le procédé de pistage multi-capteurs étant mis en oeuvre par le module de synthèse 221 (figure 2). Le module de synthèse 221 comprend un superviseur 401, un module d'association 402, un module d'initialisation 403, un module de contrôle 404, un module d'estimation cinématique 405, et une base de données 406 des pistes multi-capteurs suivies.

Le superviseur 401 est notamment une interface d'entrée pour le module de synthèse 221. Il reçoit les pseudo-pistes issues des capteurs 211, 212, 213, oriente ces pseudo-pistes soit vers le module d'association 402, soit vers le module de contrôle 404. Si une pseudo-piste n'appartient à aucune piste multi-capteurs déjà créée par le module d'initialisation 403, la pseudo-piste est traitée par le module d'association 402. Sinon, dans le cas où la pseudo-piste correspond à une piste multi-capteurs déjà créée, la pseudo-piste est traitée par le module de contrôle, qui vérifie le lien d'association, et l'envoie au module d'estimation cinématique 405 pour mise à jour de la piste de synthèse si le lien est confirmé. Le superviseur 401 retransmet en retour des pistes multi-capteurs aux capteurs 211, 212, 213 et modules de synthèse distants 222, 223

Le module d'association 402 reçoit des pseudo-pistes issues du superviseur 401, ces pseudo-pistes n'étant assignées à aucune piste multi-capteurs. Le module d'association 402 exploite principalement des paramètres radioélectriques des pseudo-pistes, c'est à dire les paramètres qui discriminent le mieux les signaux reçus, afin de pouvoir corréler les pseudo-pistes entre-elles.

Parfois, la connaissance de l'identité de l'émetteur est suffisante pour discriminer les émetteurs. Selon un mode de mise en oeuvre du procédé de pistage multi-capteurs selon l'invention, les bases de données d'émetteurs 311 stockées au niveau des capteurs sont identiques. Dans ce cas, un codage sémantique de l'identité de l'émetteur peut être réalisé afin d'obtenir une meilleure compression des données transmises sur les liaisons contraintes 204a, 204b, 204c.

Dans d'autres cas, l'identité de l'émetteur ne suffit pas et il faut utiliser des paramètres plus fins, voire utiliser leur distribution statistique. Dans un premier temps, le module d'association 402 réduit drastiquement la combinatoire d'hypothèses à tester en appliquant des techniques d'élagage à partir des paramètres grossiers, puis dans un deuxième temps, si des hypothèses d'associations ambiguës demeurent, le module d'association 402 discrimine les signaux grâce à des évaluations de distances statistiques plus fines, par exemple, entre les distributions statistiques des paramètres.

Une information géométrique apportée par les mesures de directions d'arrivée d'un signal, mesure qualifiée par la suite de DOA en référence à l'expression anglo-saxonne « Direction Of Arrival », peut être aussi utilisée pour discriminer des émissions dont la position, résultant d'une association, serait manifestement aberrante. Pour rappel, ce n'est pas une simple mesure de DOA qui est transmise par le capteur 211 au module de synthèse 221, mais un résumé d'information construit à partir d'un cumul de plusieurs mesures de DOA effectuées par le capteur.

Le module d'association 402 établit des liens de corrélation entre les pseudo-pistes, puis il stocke ces liens dans une table de corrélation enregistrée dans la base de données 406. Il exploite ensuite ces liens pour corréler des pseudo-pistes avec des pistes déjà stockées dans la base de données 406.

Sur la base des liens créés par le module d'association 402, liens associant les pseudo-pistes considérées comme caractérisant des signaux issus des mêmes émetteurs, le module d'initialisation 403 crée des pistes multi-capteurs, autrement dit, dans l'exemple, un identifiant dans la base de données regroupant les identifiants des pistes mono-capteurs associées. En d'autres termes, la table de corrélation mentionne pour chaque piste de multi-capteurs la liste des pistes mono-capteur qui lui sont assignées. Ainsi, lorsque le module de synthèse 221 transmet une piste multi-capteurs vers le capteur local 211, il transmet également l'identifiant de la piste mono-capteur correspondant au capteur local 211. La table de corrélation est mise à jour régulièrement par le module d'association 402 et par le module de contrôle 404, comme expliqué ci-après.

Le module de contrôle 404 reçoit des pseudo-pistes issues du superviseur 401, ces pseudo-pistes appartenant à des pistes mono-capteur déjà assignées à une piste multi-capteurs. En exploitant les nouvelles données fournies par les pseudo-pistes, le module de contrôle 404 vérifie le lien de corrélation existant entre la piste mono-capteur et la piste multi-capteurs. Si le lien s'avère incohérent, celui-ci est rompu - la table de corrélation est alors mise à jour - et la pseudo-piste est retournée au superviseur 401 qui transmet la pseudo-piste au module d'association 402. Si, le lien est cohérent, la pseudo-piste est transmise au module d'estimation cinématique 405.

Le module d'estimation cinématique 405 intègre les pseudo-pistes mono-capteur liées par le module d'association 402 pour déterminer la cinématique des émetteurs. Le module d'estimation 405 met en oeuvre un algorithme qui utilise un modèle cinématique pour caractériser le comportement des émetteurs, fixes ou mobiles. La cinématique des émetteurs est stockée dans la base de données 406.

Le principe de tronçonnage temporel dynamique des pistes mono-capteur et de sélection des paramètres à inclure dans ces tronçons temporels, tel qu'exposé en figure 2, comporte de multiples avantages pour le pistage multi-capteurs, parmi lesquels :
■ l'amélioration de la précision des paramètres descriptifs des signaux grâce à l'intégration des mesures sur une durée Δt ;
■ la diffusion en priorité des pseudo-pistes les plus innovantes ;
■ la diminution de la quantité de données transmises sur les liaisons contraintes 204a, 204b, 204c, notamment grâce à une sélection des paramètres pertinents ;
■ l'amélioration de la corrélation multi-capteurs des signaux en ne diffusant au module d'association 221a que des nouvelles informations reçues, sans « dissoudre » ces nouvelles informations dans un ensemble d'informations déjà transmises auparavant par les capteurs ;
■ la possibilité offerte de favoriser le pistage de certains émetteurs considérés comme importants, en attribuant des priorités sur une ou plusieurs pistes mono-capteur ;
■ l'adaptation du volume d'informations à transmettre en fonction de l'évolution des capacités des liaisons contraintes 204a, 204b, 204c ;
■ la possibilité offerte d'ajuster la fréquence de mise à jour de pistage, pour chaque piste.

Ainsi, le procédé de suivi d'émetteurs selon l'invention, en adaptant dynamiquement la quantité et le niveau de finesse des informations transmises aux modules de synthèse, permet, à volume de données transmis équivalent, d'élaborer des situations globales plus complètes qu'avec un procédé classique.

Le caractère réparti et non centralisé du pistage multi-capteurs effectué par le procédé selon l'invention permet à la fois de mieux répartir les traitements à effectuer et de minimiser les coûts de transmission.

Le fait de produire des résumés statistiques décorrélés pour effectuer le pistage multi-capteurs selon l'invention permet de s'abstraire de traitement de décorrélation, normalement nécessaire avec les architectures connues à pistage local.

Le système selon l'invention est particulièrement adapté aux contraintes souvent sévères qui limitent le volume de données transmissible entre les capteurs. En effet, seules sont transmises les pseudo-pistes correspondant à des émetteurs pour lesquels elles présentent un gain informationnel suffisant.

Le système selon l'invention peut notamment être utilisé pour suivre l'évolution d'un ensemble d'aéronefs dans le cadre de la surveillance du trafic aérien. Les capteurs peuvent être alors placés sur des porteurs aériens et/ou des plates-formes terrestres et maritimes.

Sans sortir du cadre de l'invention, d'autres procédés de mesure électromagnétique passive peuvent être employés et d'autres types de capteurs peuvent être répartis dans l'espace d'intérêt, par exemple des capteurs infrarouges ou des radars actifs. En effet, l'architecture du système demeure applicable aux échanges de données issues de mesures d'une autre nature.

## Revendications

1. Procédé de pistage mono-capteur d'émetteurs de signaux évoluant dans un espace, le procédé étant mis en oeuvre par un capteur (211, 212, 213) placé dans le voisinage dudit espace, le procédé comportant une étape de création de pistes mono-capteur, chaque piste mono-capteur comprenant des descripteurs de signaux émis par un même émetteur, **caractérisé en ce que** pour chaque piste mono-capteur, ledit capteur exécute cycliquement au moins les étapes suivantes :
■ acquérir et cumuler sur une durée Δt de nouvelles valeurs de descripteurs de signaux ;
■ à partir de ces nouvelles valeurs de descripteurs, calculer un ou plusieurs paramètres caractérisant lesdits signaux sur cette durée Δt ;
■ sélectionner un ou plusieurs paramètres à regrouper pour former un bloc de données caractérisant les signaux reçus pendant la durée Δt.

2. Procédé de pistage mono-capteur selon la revendication 1, **caractérisé en ce qu'**après l'étape de création des paramètres à partir des nouvelles valeurs de descripteurs, au moins les étapes suivantes sont exécutées :
■ mesurer le contenu informationnel d'un ou de plusieurs paramètres,
■ classer lesdits paramètres en fonction de leur contenu informationnel et du volume de données sur lequel ils sont exprimés, un rang élevé dans le classement étant affecté à un paramètre pourvu d'un contenu informationnel important et/ou exprimé avec un faible volume de données,
■ affecter des priorités aux dits paramètres en fonction du classement précédent et de critères opérationnels définis par un organe de commande et de contrôle.

3. Procédé de pistage mono-capteur selon l'une des revendications précédentes, **caractérisé en ce que** la durée de cumul Δt est ajustée en fonction du débit de nouvelles valeurs de descripteurs reçues par le capteur, la durée Δt étant réduite lorsque ledit débit augmente.

4. Procédé de pistage mono-capteur selon l'une des revendications précédentes, **caractérisé en ce que** l'étape d'acquisition et de cumul des nouvelles valeurs de descripteurs est complétée par une étape de calcul d'une description statistique d'au moins un desdits descripteurs, ladite description statistique étant associée au descripteur afin de concentrer le contenu informationnel du ou des paramètres créés à partir dudit descripteur.

5. Procédé de création de pistes multi-capteurs sur des émetteurs de signaux évoluant dans un espace, le procédé étant mis en oeuvre par des capteurs répartis dans le voisinage dudit espace, les capteurs détectant des signaux émis par le ou les émetteurs, le procédé étant **caractérisé en ce qu'**il comprend au moins les étapes suivantes :
■ chacun desdits capteurs exécute localement un procédé de pistage mono-capteur selon l'une des revendications précédentes pour produire au cours du temps des blocs de données successifs, chacun desdits blocs caractérisant des signaux détectés sur un tronçon temporel disjoint des tronçons temporels couverts par les autres blocs, une série de blocs produits à partir de signaux émis par un même émetteur formant une piste mono-capteur ;
■ les capteurs diffusent successivement lesdits blocs vers au moins un module d'association, ledit module associant entre-eux des blocs caractérisant des signaux issus d'un même émetteur pour créer une ou plusieurs pistes multi-capteurs.

6. Procédé de suivi d'émetteurs évoluant dans un espace, le procédé étant mis en oeuvre par des capteurs répartis dans le voisinage dudit espace et détectant des signaux émis par le ou les émetteurs, le procédé étant **caractérisé en ce qu'**il comporte au moins les étapes suivantes :
■ créer une ou plusieurs pistes multi-capteurs via l'exécution d'un procédé de pistage multi-capteurs selon la revendication 5 ;
■ transmettre les pistes multi-capteurs créées précédemment à au moins un module de synthèse (221, 222, 223) pour estimer la cinématique des émetteurs.

7. Procédé de suivi d'émetteurs selon la revendication 6, **caractérisé en ce qu'**il comporte en outre l'étape suivante :
■ le module de synthèse (221, 222, 223) diffuse en retour, vers les capteurs (211, 212, 213), la situation cinématique et technique des émetteurs,
l'étape de sélection des paramètres exécutée lors du pistage mono-capteur exploitant la connaissance de ladite situation pour guider la sélection des paramètres à intégrer dans les blocs de données.

8. Procédé de suivi d'émetteurs selon l'une des revendications 6 et 7, les blocs de données produits par les capteurs étant diffusés via des liaisons contraintes (204a, 204b, 204c), **caractérisé en ce que** pour une piste donnée, la durée de cumul Δt des nouvelles valeurs de descripteurs et/ou la taille maximale autorisée d'un bloc de données est ajustée en fonction du niveau de contraintes de capacité desdites liaisons.

9. Procédé de suivi d'émetteurs selon l'une des revendications 6 à 8, des niveaux de priorité étant attribués à chaque piste mono-capteur, **caractérisé en ce que** pour une piste donnée, la durée de cumul Δt des nouvelles valeurs de descripteurs et/ou la taille maximale autorisée d'un bloc de données est ajustée en fonction de la priorité attribuée à ladite piste.

10. Procédé de suivi d'émetteurs selon l'une quelconque des revendications 7 à 9, **caractérisé en ce qu'**il comporte en plus une étape de traitement des biais de mesures, la localisation de chacun des émetteurs estimé par le module de synthèse étant transmise à chaque capteur.

11. Système de suivi d'émetteurs évoluant dans un espace, le système comprenant plusieurs capteurs (211, 212, 213) répartis au voisinage dudit espace, au moins un module d'association (221 a) de pistes, les capteurs étant reliés par des liaisons contraintes (204a, 204b, 204c) à au moins un module de fusion (221 b) de pistes, le système étant **caractérisé en ce qu'**au moins un capteur exécute les étapes du procédé de pistage mono-capteur selon l'une des revendications 1 à 4.

12. Système selon la revendication 11, les émetteurs produisant des ondes électromagnétiques, **caractérisé en ce que** les capteurs sont des capteurs passifs de détection électromagnétique.

13. Système selon l'une des revendications 11 et 12, le système étant **caractérisé en ce qu'**il comprend plusieurs stations (201, 202, 203), chaque station comprenant un capteur (211, 212, 213), un module d'association (221a) et un module de fusion (221 b), les stations étant connectées entre-elles via des liaisons contraintes (204a, 204b, 204c).
